# EUROPEAN PATENT APPLICATION

(11) **EP 1 496 295 A2**
(43) Date of publication of application: **12.01.2005**
(21) Application number: 04012280.6
(22) Date of filing: 25.05.2004
(51) Int. Cl.: F16K 17/00, G05D 7/01

(54) **Flow rate regulator valve, in particular for hydraulic systems**

(30) Priority: 24.06.2003 IT pr20030050
(71) Applicant: Bompieri, Rinaldo, 46040 Monzambano (IT)
(72) Inventor: Bompieri, Rinaldo, 46040 Monzambano (IT)
(74) Representative: Gotra, Stefano

(57) **Abstract**

Flow rate regulator valve (1), in particular for hydraulic systems, comprising at least a choke (2) to induce, downstream thereof, a loss of hydraulic pressure on at least a portion of a conduit (3) for the delivery of a fluid to a user device (4). Said pressure loss controls the displacement of at least a shutter (5), movable between a position of closure and position of opening of a port (6) for discharging excess fluid sent to the user device (4). Originally, the choke (2) and the shutter (5) are positioned on a same branch of a conduit (3) for the delivery of a fluid to a user (4) and are coaxial thereto.

## Description

The present invention relates to a flow valve regulator valve, in particular for hydraulic systems.

As is well known, in oleodynamic systems, for instance for actuating mechanical arms of lorries, cranes and/or excavators, a fluid under pressure is sent to hydraulic actuators, after traversing a plurality of regulation and control valves serving one or more branches of delivery and return loops.

Generally, oleodynamic systems are provided with a unit for controlling and distributing the hydraulic fluid, usually constituted by at least a distributor with multiple positions, a constant delivery pump and a tank for collecting excess fluid sent to the user device or returning therefrom.

In accordance with the prior art, the fluid flow rate is controlled by a regulating valve provided with a choke able to induce a loss of hydraulic pressure (or head loss) on a portion of a conduit for delivery the fluid to a user device.

Said head loss controls the displacement of a movable shutter between a closed position and an open position of a discharge port, necessary to subtract from the delivery conduit any excess fluid sent to the user device.

Through the discharge port, the excess fluid is sent to a collecting tank, wherefrom it may be drawn to be re-injected into the main loop.

The shutter is generally connected to a helical spring which keeps in the position of closure of the discharge port. Simultaneously, the spring performs the function of partially offsetting the pressure difference between the two surfaces of the shutter, allowing to modulate and control the flow rate of the fluid that is discharged. The difference in pressure between the two sides of the shutter is determined by the head loss induced by the choke and it drives the displacement of the shutter.

The flow rate valves summarised above have the important drawback of being very bulky and hence difficult to position inside the systems.

The choke and the shutter are usually positioned on different, generally parallel conduits of a same regulator valve.

Another drawback is that prior art flow rate valves do not allow fluid to return through the valve itself.

A further drawback is that the aforesaid regulator valves are not able to dampen any pressure oscillations which may develop within the fluid, during the normal operation of the system.

An object of the present invention is to eliminate the aforesaid drawbacks, making available an innovative flow rate regulating valve, in particular for hydraulic systems, which is efficient and has limited bulk.

Another object of the present invention is to propose a flow rate regulating valve that is also able to behave as a return valve for the fluid.

Another object of the present invention is to make available a flow rate regulating valve that is able to dampen, at least partially, any pressure oscillations developing within the fluid.

A further object is to achieve the above results within the context of a simple, rational and reliable constructive solution.

Said objects are fully achieved by the flow rate regulating valve, in particular for hydraulic systems, of the present invention, which is characterised by the content of the appended claims.

These and other objects shall become more readily apparent from the following description of a preferred embodiment, illustrated purely by way of non limiting example in the accompanying drawing tables, in which:
- Figure 1 is a schematic and partially sectioned front view of a first operative configuration of a flow rate regulating valve according to the present invention;
- Figure 2 is a schematic front view of a second operative configuration of the flow rate regulating valve according to the present invention;
- Figure 3 is a schematic front view of a third operative configuration of the flow rate regulating valve according to the present invention

With reference to the figures, the flow rate regulating valve according to the present invention is globally designated by the number 1.

The valve 1 comprises at least one choke 2 able to induce a loss of hydraulic pressure, or head loss, on at least one portion of a conduit 3 for the delivery of a fluid to a user device 4, such as an actuator or a hydraulic cylinder (as schematically shown in the figures).

In the illustrated embodiment, the choke 2 preferably has a cone frustum shape.

The head loss induced by the choke 2 controls the displacement of at least one shutter 5, movable with continuity between at least a position of closure and a position of opening of a discharge port for excess fluid sent to the user device 4.

In innovative and original fashion, the choke 2 and the shutter 5 are positioned on a same branch of the conduit 3 for delivering a flow of fluid to the user device 4.

In the preferred and illustrated embodiment, the choke 2 and the shutter 5 are coaxial to the branch of the delivery conduit 3.

The regulator valve 1 comprises a cursor 7, movable relative to the choke 2 to vary the hydraulic pressure loss downstream of the choke itself. In particular, the cursor 7 slides along an axis Y of the delivery conduit 3, inside a fixed guide 8.

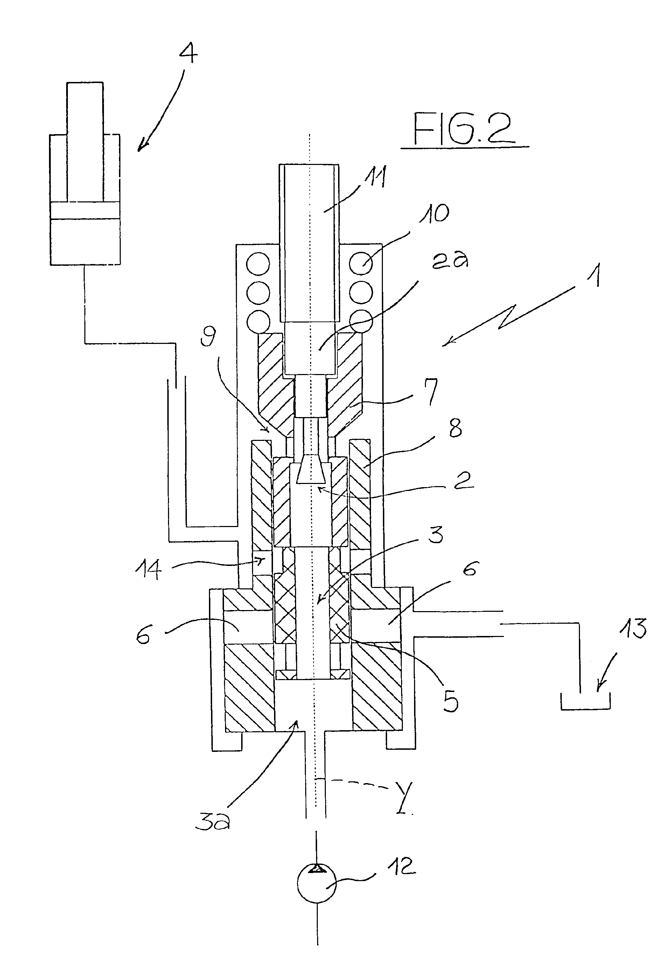

With reference to Figure 2, the cursor 7, during its sliding motion, opens and closes a port 9 for the passage of the fluid towards the user device 4.

In the preferred embodiment, the shutter 5 also slidably moves along the axis Y of the fluid delivery conduit 3. In particular, the motion of the shutter 5 is synchronised with the motion of the cursor 7, at least during the step of sending the fluid to the user device 4, although the shutter 5 is constructed in a distinct piece from the cursor 7.

However, in an alternative embodiment, not shown herein, the shutter 5 may be constructed in a single body with the cursor 7.

The cursor 7 is connected to elastic means for regulating, as a function of the loss of hydraulic pressure developed downstream of the choke 2, the opening and closing of the discharge port 6 by the shutter 5. Said elastic means are also necessary to bring the cursor 7 back to the position of closure of the port 9 for the passage of the fluid towards the user 4.

In the illustrated example, the elastic means preferably comprise a helical spring 10.

The regulator valve 1 further comprises at least one regulator element 11 which acts on a stem 2a of the choke 2 not immersed in the fluid, to adjust the position of the choke itself inside the delivery conduit 3. In particular, the regulator element 11 is preferably threaded and can slide, upwards or downwards, to adjust the position of the choke inside the delivery conduit 3.

In an alternative embodiment, not shown herein, the choke 2 can be obtained as an extension of the regulator element 11.

The operation of the invention is as follows.

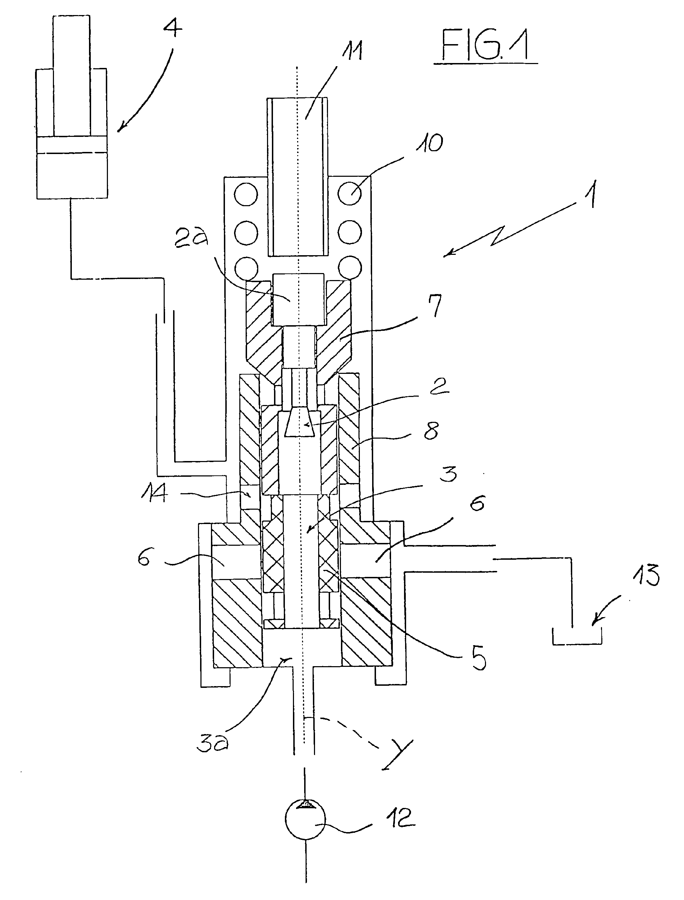

With reference to Figures 1 and 2, the pressurised fluid sent by a pump 12, preferably with constant delivery, enters into the delivery conduit 3, thrusting the shutter 5 against the cursor 7 and simultaneously making the choke 2 rise. The latter is displaced until the stem 2a thereof does not come to abut with the regulator element 11.

With particular reference to Figure 2, the fluid, after having impacted the choke 2, undergoes a loss of hydraulic pressure which, in combination with the high pressure present in correspondence with an inlet 3a of the delivery conduit 3, causes the cursor 7 and the shutter 5 to rise.

The rise of the cursor 7 causes the opening of the fluid passage port 9 towards the user 4.

The presence of the helical spring 10 positioned in contact with the cursor 7 allows the cursor and the shutter 5 to perform very small displacements able to offset any pressure oscillations which may develop within the fluid. The presence of the helical spring 10 positioned in contact with the cursor 7 allows the cursor and the shutter 5 to perform very small displacements able to offset any pressure oscillations which may develop within the fluid.

If the fluid flow rate into the delivery conduit 3 is excessive relative to what is actually required by the user device 4, the shutter 5 rises farther, uncovering the discharge port 6, through which the excess fluid flows towards a collection tank 13.

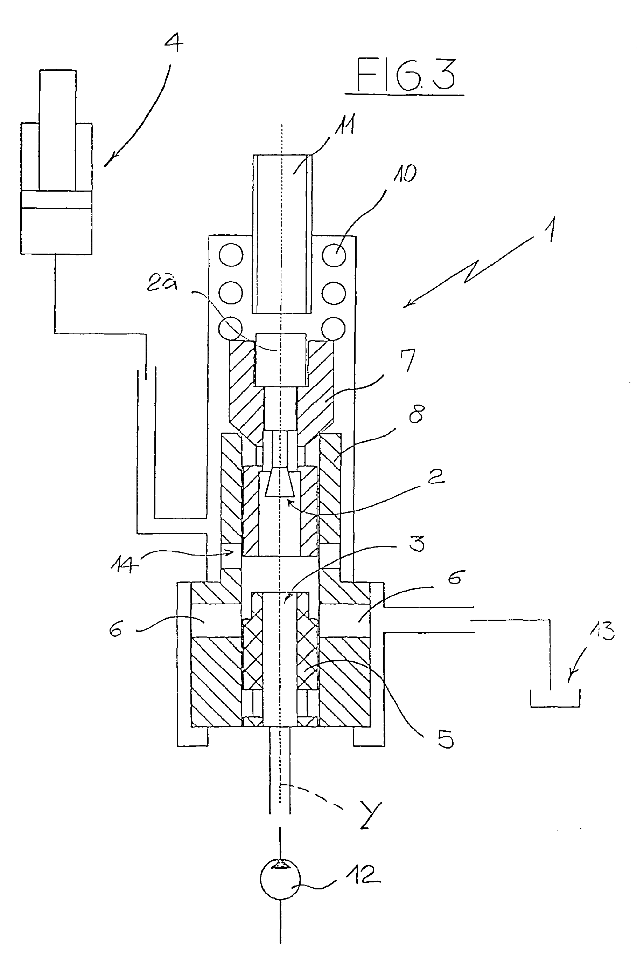

With reference to figure 3, the regulating valve 1 is provided with at least an opening 14 which consents to the valve 1 to behave also as a return valve for the fluid.

Specifically, if it becomes necessary to return fluid from the user device to the collection tank 13 (for example in systems where arts or other rotating devices are to be actuated, or simply to unload the actuator), the shutter 5 moves downwards, uncovering the opening 14 through which the fluid coming from the user 4 can reach the discharge port 6 and thence the collecting tank 13.

The invention achieves important advantages.

First of all, a regulator valve in accordance with the present invention has very reduced size, because the choke and the shutter are positioned on a same branch of the conduit for delivering the fluid to the user device.

Secondly, a flow rate regulating valve according to the invention is also able to behave as a return valve for the fluid. This is particularly advantageous, since it allows to avoid installing a dedicated valve, simplifying the oleodynamic system and decreasing its production costs.

An additional advantage is that such a flow rate regulator valve is substantially self-regulating, i.e. it is able to dampen, at least partially, any pressure oscillation which may develop within the fluid.

## Claims

1. A flow rate regulator valve (1), in particular for hydraulic system, comprising:
at least a choke (2) to induce, downstream of the choke, a hydraulic pressure loss on at least a portion of a conduit (3) for the delivery of a fluid to a user (4), said pressure loss controlling a displacement of
at least a shutter (5) movable between at least a position of closure and a position of opening of a port (6) for discharging excess fluid sent to the user device (4),
**characterised in that** the choke (2) and the shutter (5) are positioned on a same branch of the conduit (3) for delivering a flow of fluid to the user device (4).

2. Regulator valve as claimed in claim 1, **characterised in that** the choke (2) and the shutter (5) are coaxial to the branch of the fluid delivery conduit (3).

3. Regulator valve as claimed in claim 1, **characterised in that** the shutter (5) is movable with continuity in the delivery conduit (3), between said position of opening and said position of closure of the exhaust port (6).

4. Regulator valve as claimed in claim 1, **characterised in that** it comprises a cursor (7) that is movable relative to the choke (2) to vary the hydraulic pressure loss downstream of the choke (2) itself, said cursor (7) displacing slidably inside a fixed guide (8) to open and close a port (9) for the passage of the fluid towards a user device (4).

5. Regulator valve as claimed in claim 4, **characterised in that** the cursor (7) is slidably movable along an axis (Y) of the fluid delivery conduit (3).

6. Regulator valve as claimed in claim 4, **characterised in that** the shutter (5) is slidably movable along an axis (Y) of the fluid delivery conduit (3) and its motion is synchronised to the motion of the cursor (7), at least during the delivery of the fluid to the user device (4).

7. Regulator valve as claimed in claim 4, **characterised in that** the shutter (5) is constructed in a single body with the cursor (7).

8. Regulator valve as claimed in claims 6 or 7, **characterised in that** the cursor 7 is connected to elastic means for regulating, as a function of the loss of hydraulic pressure, the opening and closing of the discharge port (6) by the shutter (5) and for returning the cursor (7) to the position of closure of the port (9) for the passage of the fluid towards the user (4).

9. Regulator valve as claimed in claim 8, **characterised in that** the elastic means comprise at least a helical spring (10).

10. Regulator valve as claimed in claim 1, **characterised in that** it comprises a regulator element (11) operatively active on the choke (2) to adjust its position inside the delivery conduit (3).

11. An oleodynamic system, **characterised in that** it comprises at least a flow rate regulator valve (1) as claimed in any of the previous claims.
